# EUROPEAN PATENT APPLICATION

(11) **EP 4 607 930 A1**
(43) Date of publication of application: **27.08.2025**
(21) Application number: 23879112.3
(22) Date of filing: 17.10.2023
(51) Int. Cl.: H04N 21/2187, H04N 21/431

(54) **LIVE STREAMING INTERFACE INTERACTION METHOD AND APPARATUS, DEVICE AND STORAGE MEDIUM**

(30) Priority: 18.10.2022 CN 202211276048
(71) Applicant: Beijing Zitiao Network Technology Co., Ltd., Beijing 100190 (CN)
(72) Inventor: CAI, Xiaochun, Beijing 100028 (CN); JIANG, Kun, Beijing 100028 (CN); ZHANG, Tiantian, Beijing 100028 (CN)
(74) Representative: Marks & Clerk LLP
(86) International application number: PCT/CN2023/124992
(87) International publication number: WO 2024/083124

(57) **Abstract**

According to embodiments of the disclosure, a method, an apparatus, a device and a storage medium for live streaming interface interaction are provided. The method includes receiving a predetermined request for a live streaming interface, the live streaming interface providing, in real time, an audio-visual content associated with a target session established in a live streaming room; causing a target interface corresponding to the predetermined request to be presented; and superimposing, on the target interface, a window associated with the live streaming interface, the window at least displaying description information associated with at least one participant in the target session. In this way, with embodiments of the disclosure, it may present relevant information of a target session (e.g., voice chat or video chat) established in the live streaming room that the user is interested in, thereby improving efficiency of the user in obtaining information in the live streaming room.

## Description

This application claims priority to Chinese Patent Application No. CN 202211276048.6, filed on October 18, 2022, and entitled "METHOD, APPARATUS, DEVICE, AND STORAGE MEDIUM FOR LIVE STREAMING INTERFACE INTERACTION", the entire content of which is incorporated herein by reference.

### FIELD

Example embodiments of the present disclosure generally relate to the field of computers, and more particularly, to a method, an apparatus, a device, and a computer-readable storage medium for interface interaction.

### BACKGROUND

With the development of computer technologies, various live streaming may provide people with content such as information, education and entertainment. Some live streaming rooms may also enable creation of a session to facilitate real-time audio and video communication between a streamer or viewers in the live streaming room.

For example, the viewer may join the voice group chat in the live streaming room through voice connection, and the viewer who is not connected may only obtain the audio content of participants in the voice group chat. In some cases, one may desire to leave the current live streaming interface while waiting to join the voice connection or other scenarios, but he/she still wishes to keep his/her focus on the session of the live streaming room.

### SUMMARY

In a first aspect of the present disclosure, a method for interface interaction is provided. The method includes: receiving a predetermined request for a live streaming interface, the live streaming interface providing, in real time, an audio-visual content associated with a target session established in a live streaming room; causing a target interface corresponding to the predetermined request to be presented; and superimposing, on the target interface, a window associated with the live streaming interface, the window at least displaying description information associated with at least one participant in the target session.

In a second aspect of the present disclosure, an apparatus for interface interaction is provided. The apparatus includes: a receiving module configured to receive a predetermined request for a live streaming interface, the live streaming interface providing, in real time, an audio-visual content associated with a target session established in a live streaming room; a control module configured to cause a target interface corresponding to the predetermined request to be presented; and a presenting module configured to superimpose, on the target interface, a window associated with the live streaming interface. The window at least displays description information associated with at least one participant in the target session.

In a third aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect.

In a fourth aspect of the present disclosure, a computer-readable storage medium is provided. The medium stores a computer program, and when the program is executed by the processor, the method of the first aspect is implemented.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, in which:
FIG. 1 illustrates an example live streaming interface according to a conventional approach;
FIG. 2 illustrates a schematic diagram of presenting an example live streaming interface according to some embodiments of the present disclosure;
FIG. 3A to FIG. 3D are schematic diagrams of presenting a window related to a live streaming interface according to some embodiments of the present disclosure;
FIG. 4A to FIG. 4C illustrate example windows according to some embodiments of the present disclosure;
FIG. 5A to FIG. 5D illustrate example windows according to some further embodiments of the present disclosure;
FIG. 6 shows a flowchart of an example process of live streaming interface interaction according to some embodiments of the present disclosure;
FIG. 7 illustrates a block diagram of an apparatus for live streaming interface interaction according to some embodiments of the present disclosure; and
FIG. 8 illustrates a block diagram of a device capable of implementing various embodiments of the present disclosure.

### DETAILED DESCRIPTION

Embodiments of the present disclosure will be described in more detail below with reference to the accompanying drawings. Although certain embodiments of the present disclosure are illustrated in the accompanying drawings, it should be understood that, the present disclosure may be implemented in various forms and should not be construed as limited to the embodiments set forth herein. On the contrary, these embodiments are provided for a more thorough and complete understanding of the present disclosure. It should be understood that, the drawings and embodiments of the present disclosure are provided for illustrative purposes only and are not intended to limit the scope of protection of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

As discussed above, in some live streaming rooms, audio or video sessions may be created. This type of live streaming room may also be referred to as a chat room. For example, one may join the live streaming room through voice connection to participate in online voice games such as "script murder", or may interact with other participants in the live streaming room by connecting via video.

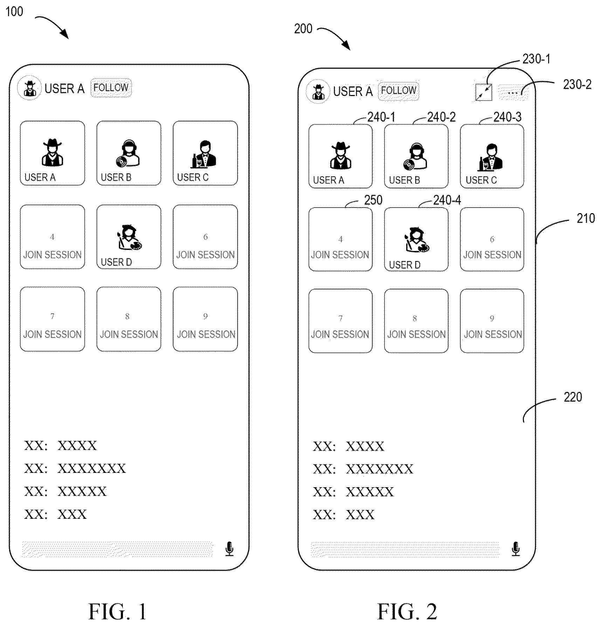

FIG. 1 illustrates an example live streaming interface 100 according to a conventional approach. As illustrated in FIG. 1, an electronic device (for example, a mobile terminal) may present a live streaming interface 100. The live streaming interface 100 may, for example, present relevant information of the live streaming room. As illustrated in FIG. 1, the live streaming interface 100 may present information about participants related to a session (for example, a voice chat session) established in the live streaming room. In addition, a user may also apply to join the session through the live streaming interface 100.

However, after the user leaves the live streaming room because of some needs, the live streaming interface 100 will be closed directly. This kind of interaction manner may be inconvenient for the user. For example, during the process of applying for voice connection, the user may desire to jump to further interfaces to browse other content first due to waiting time issues. However, exiting the live streaming interface may cause the user's application for voice connection to be cancelled directly. In addition, the user may desire to keep the focus on information of participants in the session in the live streaming room while browsing other interfaces.

Embodiments of the present disclosure provide a solution for live streaming interface interaction. According to the solution, the electronic device may receive a predetermined request for the live streaming interface. The live streaming interface provides, in real time, the audio-visual content (e.g., a real-time audio stream and/or a real-time video stream) associated with the target session established in the live streaming room.

Furthermore, in response to the request, the electronic device may cause a target interface corresponding to the predetermined request to be presented, and superimpose, on the target interface, a window associated with the live streaming interface. The window at least displays description information associated with at least one participant in the target session.

In this way, with the embodiments of the present disclosure, the user may be allowed to still keep the focus on the session created in the live streaming room whiling browsing other interfaces through a small window, thereby improving the efficiency of the user in obtaining the live streaming room information.

Various example implementations of the solution will be described in detail below with reference to the accompanying drawings.

### Example Live Streaming Interfaces

With reference to FIG. 2 first, FIG. 2 schematically shows a schematic diagram 200 of presenting an example live streaming interface according to some embodiments of the present disclosure. As illustrated in FIG. 2, the electronic device 210 may provide a live streaming interface 220.

For example, the electronic device 210 may be, e.g., an intelligent terminal (e.g., a smart phone). It should be understood that although the electronic device 210 in FIG. 2 is illustrated as a smart phone, it may also be any other suitable device, including but not limited to, a tablet computer, a notebook computer, a desktop computer, a personal digital assistant, a smart wearable device, a vehicle-mounted device, or the like.

In addition, as an example, the live streaming interface 220 may be provided by a live streaming application or other applications (hereinafter referred to as the live streaming application), installed on the electronic device 210, that provide live streaming services. The live streaming application may provide live streaming content to users in the live streaming room. The users in the live streaming room may include, for example, the streamer, the participant (e.g., the connected user) of the audio or video session in the live streaming room, an applicant who applies to join the connection in the live streaming room, a viewer in the live streaming room, and the like.

Illustratively, as illustrated in FIG. 2, the live streaming interface 220 may include information about at least one participant 240-1, 240-2, 240-3, and 240-4 (individually or collectively referred to as participant 240) of a session already created in the live streaming room. The participant 240 is the user who has connected to the voice session or video session in the live streaming room.

As illustrated in FIG. 2, the live streaming interface 220 may present a text identification of the participant 240, such as the participant 240s's username, nickname, or virtual character name (e.g., a character name in a script murder game), etc. Additionally, the live streaming interface 220 may further present an image identification of the participant 240, such as the participant 240's avatar or selected virtual avatar.

Additionally, the live streaming interface 220 may also include, for example, one or more connection controls 250. The viewer in the live streaming room may submit a request to join the session in the live streaming room by clicking the connection control 250.

In some embodiments, the number of participants of the session in the live streaming room may be limited. For example, with FIG. 2 as an example, it may permit up to nine users to join the session simultaneously. Alternatively, for example, the number of participants of the session in the live streaming room may also be unlimited.

In some embodiments, as illustrated in FIG. 2, the participant in the live streaming room may be assigned a corresponding sequence number. For example, the "User A" may correspond to a sequence number "1", and the "User B" may correspond to a sequence number "2". For example, the participant who joins the session by clicking the connection control 250 corresponding to the sequence number "4" may be assigned a sequence number "4".

In some embodiments, unlike conventional live streaming interfaces, the electronic device 210 may also provide at least one request control 230-1 and 230-2 (individually or collectively referred to as the request control 230) in the live streaming interface 220.

For example, the user may click the request control 230-1 to generate a request to display the live streaming interface 220 in a windowed manner, such that the live streaming room is presented in the windowed manner described below.

Alternatively, the user may also click the request control 230-2 to generate a request to exit the live streaming interface 220. After the live streaming interface 220 is exited, the live streaming room may be presented in the windowed manner described below.

In some embodiments, when the user submits the request to exit the live streaming interface 220, the electronic device 210 may provide a reminder as to whether to present the live streaming interface 220 in the windowed manner. Upon receiving confirmation of the reminder by the user, the electronic device 210 may continue to present the live streaming interface 220 in the windowed manner.

Alternatively, after the live streaming interface 220 is exited, whether to continue presenting the live streaming interface 220 in the windowed manner may be determined based on the user configuration. For example, the user may configure in the live streaming application to always present the live streaming interface in the windowed manner after the live streaming interface is exited. Alternatively, the user may also configure in the operating system of the electronic device 210 to permit to present the live streaming interface in the windowed manner.

In some embodiments, only when the user submits the request to join the session and the user has not connected to the session, the electronic device 210 presents the live streaming interface automatically or in the windowed manner after the live streaming interface is exited. In contrast, if the user clicks the request control 230-1, the live streaming interface may continue to be presented in the windowed manner after it is exited, regardless of whether the user is applying to join the session.

In some embodiments, the user may also generate a request to jump to the target interface through appropriate operations. For example, the user may trigger a request to return to a previous interface by clicking a "Return" control. Alternatively, the user may also trigger the jump to a recommendation interface of the live-streaming application by sliding the live-streaming interface 220.

As a further example, the user may also jump to an operating system desktop interface or the interface of other applications through a system-level gesture supported by the electronic device 210.

In some embodiments, for example, the windowed display of the live streaming interface 220 may be supported only within the live streaming application. Alternatively, the windowed display of the live streaming interface may be supported in any suitable interface of the electronic device 210, including but not limited to, an operating system desktop, the interface of other applications, and the like.

Example implementations of the windowed display of the live streaming interface will be described in detail below.

### Example Windowed Display of Live Streaming Interface

In some embodiments, after receiving the predetermined request for the live streaming interface 220, the electronic device 210 may cause the target interface corresponding to the predetermined request to be presented, and superimpose, on the target interface, the window associated with the live streaming interface. The window may, for example, display description information associated with at least one participant in the target session.

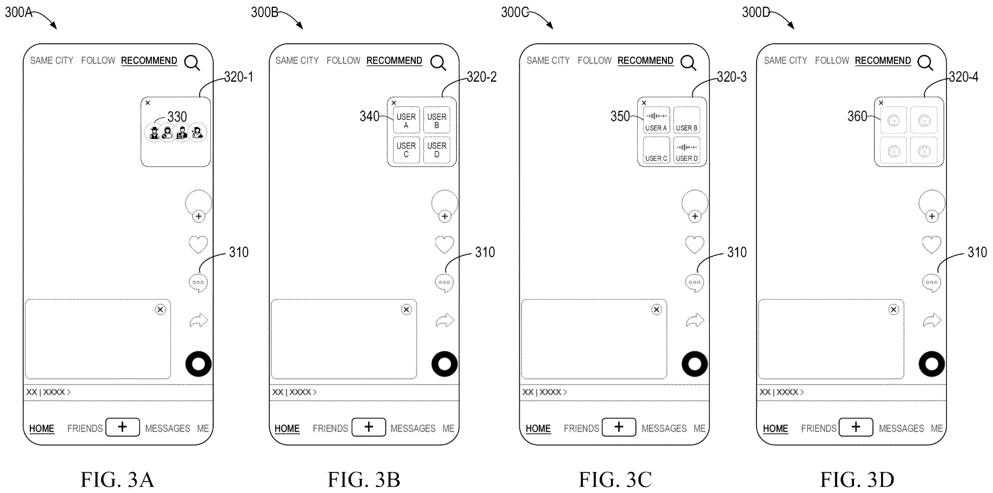

An example windowed display of the live streaming interface 220 will be described below with reference to FIG. 3A to FIG. 3D.

### Example One

FIG. 3A shows a schematic diagram 300A of presenting a window related to a live streaming interface according to some embodiments of the present disclosure. As illustrated in FIG. 3A, after receiving the predetermined request for the live streaming interface 220, the electronic device 210 may present the target interface 310 illustrated in FIG. 3A.

In some embodiments, the target interface 310 may be provided, for example, by a live streaming application. Alternatively, the target interface 310 may also be generated by the operating system or other applications of the electronic device 210.

Furthermore, as illustrated in FIG. 3A, the electronic device 210 may superimpose, over the target interface 310, a window 320-1 associated with the live streaming interface 220. The window 320-1 may also be referred to as a floating window or a suspended window.

In some embodiments, for example, the window 320-1 may have a fixed size or shape. Alternatively, the size or shape of the window 320-1 may also change dynamically, for example, based on the user operation. Additionally, the location of window 320-1 may also change in response to the user operation. For example, the user may drag the window 320-1 to any suitable display location.

In some embodiments, as illustrated in FIG. 3A, the window 320-1 may present an image identification 330 of at least one participant of the target session in the live streaming room. The image identification 330 may include, for example, the avatar or the selected virtual avatar of at least one participant.

In the example of FIG. 3A, the window 320-1 may, for example, present the image identification of all four participants 240. In some embodiments, for example, the layout of the image identifications of the plurality of participants 240 in the window 320-1 may be determined based on an order of the plurality of participants 240 in joining the target session. For example, the avatar of the participant in joining the session earlier may be arranged in front of the avatar of the participant in joining the session later.

Alternatively, the layout of the image identifications of the plurality of participants 240 in the window 320-1 may also be based on, for example, the sequence number assigned to the plurality of participants 240 in the target session. For example, as discussed above, the participant 240-1 may be assigned the sequence number "1", the participant 240-2 may be assigned the sequence number "2", the participant 240-3 may be assigned the sequence number "3", and the participant 240-4 may be assigned the sequence number "5". Correspondingly, the layout of the avatars of the plurality of participants 240 in the window 320-1 may be correspondingly arranged based on the size of the sequence numbers.

### Example Two

FIG. 3B shows a schematic diagram 300B of presenting a window related to a live streaming interface according to some embodiments of the present disclosure. As illustrated in FIG. 3B, after receiving the predetermined request for the live streaming interface 220, the electronic device 210 may present the target interface 310 illustrated in FIG. 3B.

In some embodiments, the target interface 310 may be provided, for example, by a live streaming application. Alternatively, the target interface 310 may also be generated by the operating system or other applications of the electronic device 210.

Furthermore, as illustrated in FIG. 3B, the electronic device 210 may superimpose, over the target interface 310, a window 320-2 associated with the live streaming interface 220. Similar to the window 320-1 described with reference to FIG. 3A, for example, the window 320-2 may have a fixed size or shape. Alternatively, the size or shape of the window 320-2 may also change dynamically, for example, based on the user operation. Additionally, the location of window 320-2 may also change in response to the user operation. For example, the user may drag the window 320-2 to any suitable display location.

In some embodiments, as illustrated in FIG. 3B, the window 320-2 may present a text identification 340 of at least one participant of the target session in the live streaming room. The image identification 340 may include, for example, the username, the nickname, or the virtual character name of the at least one participant.

In the example of FIG. 3B, the window 320-2 may, for example, present a text identification of all four participants 240. Similarly, the arrangement of the text representation may be based on the order of the plurality of participants 240 in joining the target session. Alternatively, the arrangement may also be based on the sequence number assigned to the plurality of participants 240 in the target session.

### Example Three

FIG. 3C shows a schematic diagram 300C of presenting a window related to a live streaming interface according to some embodiments of the present disclosure. As illustrated in FIG. 3C, after receiving the predetermined request for the live streaming interface 220, the electronic device 210 may present the target interface 310 illustrated in FIG. 3C.

In some embodiments, the target interface 310 may be provided, for example, by a live streaming application. Alternatively, the target interface 310 may also be generated by the operating system or other applications of the electronic device 210.

Furthermore, as illustrated in FIG. 3C, the electronic device 210 may superimpose, over the target interface 310, a window 320-3 associated with the live streaming interface 220. Similar to the window 320-1 and the window 320-2 described above, for example, the window 320-3 may have a fixed size or shape. Alternatively, the size or shape of the window 320-3 may also change dynamically, for example, based on the user operation. Additionally, the location of window 320-3 may also change in response to the user operation. For example, the user may drag the window 320-3 to any suitable display location.

In some embodiments, as illustrated in FIG. 3C, in addition to presenting the text identification of the at least one participant of the target session in the live streaming room, the electronic device 210 may further present, in the window 320-3, a dynamic graphic 350 corresponding to an audio stream from the participant. The dynamic graphic 350 may include, for example, an audio waveform corresponding to the audio content of the respective participant 240.

In some embodiments, the electronic device 210 may only present the dynamic graphic 350 corresponding to the participant 240 in the window 320-3, without presenting the text identification or the image identification of the participant 240. Alternatively, the electronic device 210 may present the dynamic graphic 350 in combination with the text identification and/or the image identification in the window 320-3.

In some embodiments, for example, if a specific participant 240 is currently not outputting the audio content, the electronic device 210 may present a corresponding blank area in the window 320-3. Alternatively, if a specific participant 240 is currently in a state where the microphone is not turned on, the electronic device 210 may present, for example, a graphic element corresponding to the "microphone not turned on status" in the corresponding area in the window 320-3.

### Example Four

FIG. 3D shows a schematic diagram 300C of presenting a window related to a live streaming interface according to some embodiments of the present disclosure. As illustrated in FIG. 3D, after receiving the predetermined request for the live streaming interface 220, the electronic device 210 may present the target interface 310 illustrated in FIG. 3D.

In some embodiments, the target interface 310 may be provided, for example, by a live streaming application. Alternatively, the target interface 310 may also be generated by the operating system or other applications of the electronic device 210.

Furthermore, as illustrated in FIG. 3D, the electronic device 210 may superimpose, over the target interface 310, a window 320-4 associated with the live streaming interface 220. Similar to the window 320-1, the window 320-2, and the window 320-3 described above, for example, the window 320-4 may have a fixed size or shape. Alternatively, the size or shape of the window 320-4 may also change dynamically, for example, based on the user operation. Additionally, the location of window 320-4 may also change in response to the user operation. For example, the user may drag the window 320-4 to any suitable display location.

In some embodiments, as illustrated in FIG. 3D, the electronic device 210 may further present a video stream 360 from the respective participant in the window 320-4.

In some embodiments, the electronic device 210 may only present the video stream 360 corresponding to the participant 240 in the window 320-4, without presenting the text identification or the image identification of the participant 240. Alternatively, the electronic device 210 may present the video stream 360 in combination with the text identification and/or the image identification in the window 320-4.

In some embodiments, for example, if a specific participant 240 is currently not outputting the video content, the electronic device 210 may present a corresponding graphic element in the window 320-4. For example, if the specific participant 240 currently is in a state where the camera is not turned on, the electronic device 210 may present, for example, a graphic element corresponding to the "camera not turned on status" in the corresponding area in the window 320-4.

Based on the above manner, with the embodiments of the present disclosure, it may facilitate the user to keep the focus on the target session in the live streaming room even when jumping to other interfaces, thereby improving the efficiency of the user in obtaining the content.

### Example Change of windowed Display

In some embodiments, the electronic device 210 may also dynamically update the content displayed in the windows (e.g., the window 320-1, the window 320-2, the window 320-3, and the window 320-4) as discussed above. For convenience of description, the updating of the content presented in the window will be described below with the window 320-1 as an example. It should be understood that the update mechanism is also applicable to other windows discussed above or other specific window examples that meet the spirit of the present disclosure.

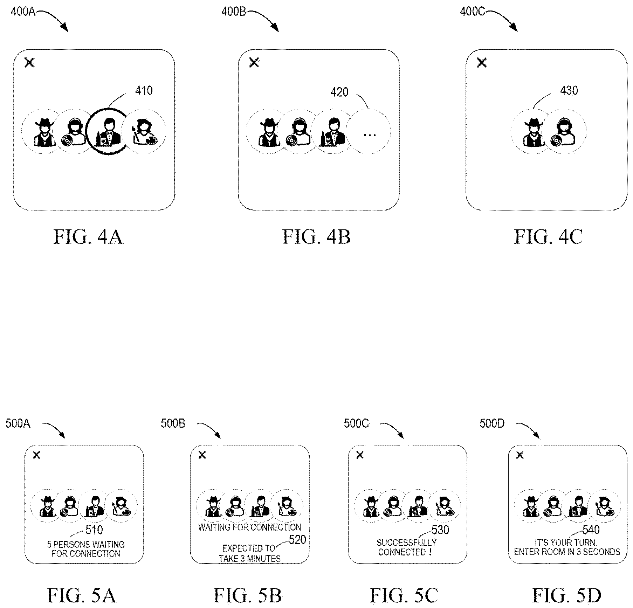

FIG. 4A illustrates an example window 400A according to some embodiments of the present disclosure. As illustrated in FIG. 4A, if a specific participant 240 is outputting an audio, for example, the electronic device 210 may cause the description information 410 (e.g., the image identification) of the participant 240 to be presented in the window 400A highlighted.

For example, the highlighted presentation may include, for example, highlighting the participant's avatar, such that the user may perceive which participant is currently providing the audio output. In some examples, the electronic device 210 may also dynamically highlight the avatar of the participant according to the output rhythm of the audio.

FIG. 4B illustrates an example window 400B according to some embodiments of the present disclosure. As illustrated in FIG. 4B, for example, the window 400B may present description information of up to a certain number of participants. If the electronic device 210 determines that the number of participants of the target session in the live streaming room increases, resulting in it exceeding a threshold number (e.g., four people), the electronic device 210 may then only present description information of a predetermined number (e.g., three people) of participants among all participants. In contrast, if the number of participants does not exceed the threshold, the electronic device 210 may present description information of all participants.

In some embodiments, as illustrated in FIG. 4B, the electronic device 210 may further present a reminder element 420 in the window 400B to indicate that the current window 400B does not present description information of all participants. Alternatively, the reminder element 420 may also indicate, for example, the number of participants in the live streaming room.

FIG. 4C illustrates an example window 400C according to some embodiments of the present disclosure. As illustrated in FIG. 4C, if the electronic device 210 determines that a specific participant of the target session in the live streaming room has left the target session, the electronic device 210 may remove the description information of the participant from the window 400C, and only present the description information 430 of the participants who are still connected to the target session.

In this way, the electronic device 210 may update the window associated with the live streaming interface in response to a change in participant information in the target session, to indicate the change in the participant information. Thus, the user may, for example, intuitively know which participants have newly joined the target session, or which participants have left the target session. In addition, for example, the user may also know the participation intensity of the target session of the live streaming room.

It should be understood that although FIG. 4A to FIG. 4C describe an example change mechanism of the window in connection with the image identification, the change mechanism may also be similarly applied to other types of description information discussed above.

### Control Mechanism of Window

In some embodiments, the electronic device 210 may further support interaction with the windows (e.g., the window 320-1 to the window 320-4, and the window 400A to the window 400C) discussed above.

For example, the electronic device 210 may present the live streaming interface and close the window accordingly in response to a predetermined operation for the window. For example, the user may click, double click, or slide the window in an appropriate manner, such that the electronic device 210 jumps to the corresponding live streaming interface 220 and stops displaying the window.

In some embodiments, the electronic device 210 may also control the audio playback priority of the window relative to the presented target interface. Illustratively, for example, the electronic device 210 may configure the playing priority of the audio content in the window to be always lower than that of the target interface. In this case, if the target content has audio output, the electronic device 210 may not output the audio content of the live streaming room.

In still further embodiments, the electronic device 210 may also dynamically control the playing priority of the audio content in the window based on the role of the user in the live streaming room. For example, if the current user is the viewer of the live streaming room or the applicant applying to join the target session, the electronic device 210 may configure the playing priority of the audio content in the window to be lower than that of the target interface.

As another example, if the current user is the participant in the live streaming room, the electronic device 210 may configure the playing priority of the audio content in the window to be higher than that of the target interface, such that the electronic device 210 always prioritizes playing of the audio content in the live streaming room.

In this way, embodiments of the present disclosure may more flexibly control the provision of audio and video content in the window.

### Provision of Connection Information

In some embodiments, if the current user is an applicant applying to join the target session in the live streaming room, the electronic device 210 may also present the information related to the connection application with the window.

FIG. 5A illustrates an example window 500A according to some other embodiments of the present disclosure. As illustrated in FIG. 5A, for example, the electronic device 210 may further present the application information 510 in the window 500A. For example, the application information 510 may indicate an application status (e.g., the number of users (e.g., "5 persons") waiting to join the target session before the current user) associated with the request to join the target session.

As a further example, as illustrated in FIG. 5B, the electronic device 210 may present application information 520 in the window 500B to indicate an expected waiting time (e.g., "expected 3 minutes") for the current user to join the target session.

Additionally, if it is determined that the user is permitted to join the target session in the live streaming room, the electronic device may further present, in the window, a reminder of permission of joining the target session. For example, as illustrated in FIG. 5C, the electronic device 210 may present a reminder 530, to indicate that the user is permitted to be connected to the target session.

In some embodiments, the electronic device 210 may jump to the live streaming interface after a predetermined time period after the user is permitted to join the target session, that is, present the live streaming interface and close the window. In some embodiments, the current user may be automatically added as a participant to the live streaming target session, and the user's audio device and/or video device may be automatically turned on.

Alternatively, when the window currently presents a reminder that the user is permitted to connect to the target session, the electronic device 210 may jump to the live streaming interface based on the user's selection of the reminder. Accordingly, the current user may be automatically added as a participant to the live streaming target session, and the user's audio device and/or video device may be automatically turned on.

As yet a further example, as illustrated in FIG. 5D, the electronic device 210 may present a reminder 540 in the window 500D. The reminder 540 may include countdown information for automatically jumping to the live streaming interface. Furthermore, the countdown information may be dynamically updated over time, and after the countdown ends, the electronic device 210 may jump to the live streaming interface, that is, present the live streaming interface and close the window. Accordingly, the current user may be automatically added as a participant to the live streaming target session and the user's audio device and/or video device may be automatically turned on.

In addition, as described above, if the current user is the applicant who applies to join the target session, when a close request to close the window is received, the electronic device 210 may present the prompt information, to indicate that the request to join the target session will be cancelled. Furthermore, after receiving the confirmation for the prompt information, the electronic device 210 closes the window and cancels the request to join the target session.

In this way, with the embodiments of the present disclosure, it may more effectively provide the applicant requesting to join the session with status information related to the application request, and may support the users in browsing other interfaces whiling waiting for their request to be permitted, thereby greatly improving the user experience.

### Example Processes

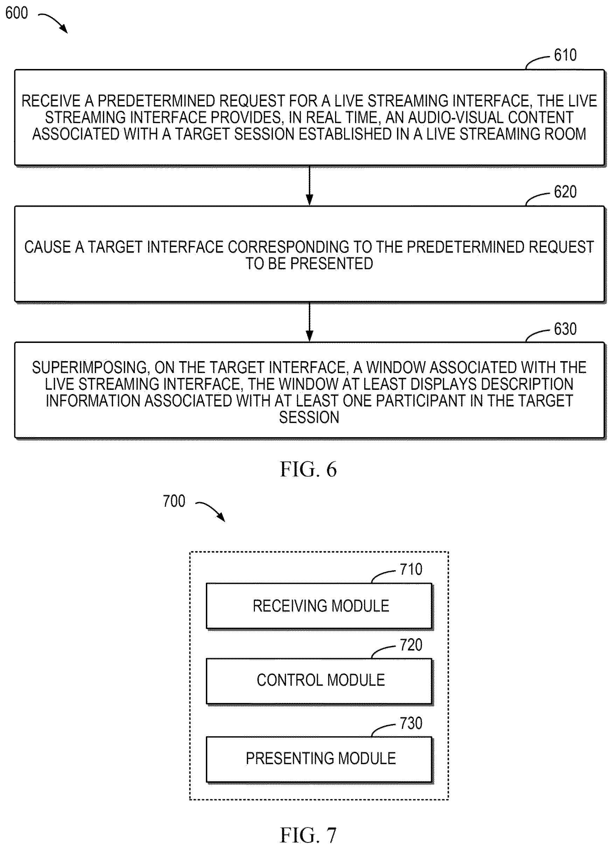

FIG. 6 illustrates a flowchart of an example process 600 for live streaming interface interaction according to some embodiments of the present disclosure. The process 600 may be implemented independently of the electronic device 210 of FIG. 2, or by a combination of the electronic device 210 and other computing devices. For ease of discussion, the process 600 will be described with reference to FIG. 2.

As illustrated in FIG. 6, at block 610, the electronic device 210 receives a predetermined request for a live streaming interface. The live streaming interface provides, in real time, an audio-visual content associated with a target session established in a live streaming room.

At block 620, the electronic device 210 causes a target interface corresponding to the predetermined request to be presented.

At block 630, the electronic device 210 superimposes, on the target interface, a window associated with the live streaming interface. The window at least displays description information associated with at least one participant in the target session.

In some embodiments, receiving the predetermined request for the live streaming interface includes receiving a first request to jump to the target interface; receiving a second request to exit the live streaming interface; or receiving a third request to display the live streaming interface in a windowed manner.

In some embodiments, the description information associated with the at least one participant includes: a text identification of the at least one participant; and/or an image identification of the at least one participant.

In some embodiments, the description information associated with the at least one participant includes: a dynamic graphic corresponding to the audio stream from the at least one participant; and/or a video stream from the at least one participant.

In some embodiments, the predetermined request corresponds to a first user, and the first user is an applicant who applies to join the target session.

In some embodiments, the window further presents application information. The application information indicating an application status associated with a request to join the target session.

In some embodiments, the application information at least indicates: a number of users waiting to join the target session before the first user; and/or an expected waiting time for the first user to join the target session.

In some embodiments, the method further includes in accordance with a determination that the first user is permitted to join the target session, presenting, in the window, a reminder of permission of joining the target session.

In some embodiments, the reminder includes countdown information for automatically jumping to the live streaming interface.

In some embodiments, the method further includes in accordance with a determination that the first user is permitted to join the target session, presenting the live streaming interface and closing the window after a predetermined time period.

In some embodiments, the method further includes receiving a closing request to close the window; presenting prompt information, the prompt information indicating that a request to join the target session will be cancelled; and in response to receiving a confirmation for the prompt information, closing the window and canceling the request to join the target session.

In some embodiments, the predetermined request corresponds to a second user, and the second user is a viewer of the target session.

In some embodiments, in the target interface, a playing priority of an audio content is higher than a playing priority of the window.

In some embodiments, the predetermined request corresponds to a third user, and the third user is a participant of the target session.

In some embodiments, in the window, a playing priority of an audio content is higher than a playing priority of the target interface.

In some embodiments, the method further includes in accordance with a determination that a number of participants of the target session is less than a predetermined threshold, presenting, in the window, description information of all participants; or in accordance with a determination that a number of participants of the target session is greater than or equal to a predetermined threshold, presenting, in the window, description information of a predetermined number of participants among all participants.

In some embodiments, the method further includes in accordance with a determination that the at least one participant is outputting an audio, causing the description information of the at least one participant to be presented in the window highlighted.

In some embodiments, the method further includes in response to a change in participant information in the target session, updating the window to indicate the change in the participant information.

In some embodiments, the audio-visual content includes a real-time video stream and/or a real-time audio stream.

In some embodiments, the method further includes in response to a predetermined operation for the window, presenting the live streaming interface and closing the window.

In some embodiments, the target session corresponds to a voice chat session or a video chat session in the live streaming room.

In some embodiments, a layout of the description information of the at least one participant in the window is determined based on at least one of: an order of the at least one participant in joining the target session; or a sequence number assigned to the at least one participant in the target session.

### Example Apparatus and Device

Embodiments of the present disclosure further provide a corresponding apparatus for implementing the above method or process. FIG. 7 is a schematic block diagram of an apparatus 700 for live streaming interface interaction according to some embodiments of the present disclosure.

As illustrated in FIG. 7, the apparatus 700 includes a receiving module 710 configured to receive a predetermined request for a live streaming interface. The live streaming interface provides, in real time, an audio-visual content associated with a target session established in a live streaming room.

The apparatus 700 further includes a control module 720 configured to cause a target interface corresponding to the predetermined request to be presented.

In addition, the apparatus 700 further includes a presenting module 730 configured to superimpose, on the target interface, a window associated with the live streaming interface. The window at least displays description information associated with at least one participant in the target session.

In some embodiments, the receiving module 710 is further configured to: receive a first request to jump to the target interface; receive a second request to exit the live streaming interface; or receive a third request to display the live streaming interface in a windowed manner.

In some embodiments, the description information associated with the at least one participant includes: a text identification of the at least one participant; and/or an image identification of the at least one participant.

In some embodiments, the description information associated with the at least one participant includes: a dynamic graphic corresponding to the audio stream from the at least one participant; and/or a video stream from the at least one participant.

In some embodiments, the predetermined request corresponds to a first user, and the first user is an applicant who applies to join the target session.

In some embodiments, the window further presents application information. The application information indicating an application status associated with a request to join the target session.

In some embodiments, the application information at least indicates: a number of users waiting to join the target session before the first user; and/or an expected waiting time for the first user to join the target session.

In some embodiments, the presenting module 730 is further configured to in accordance with a determination that the first user is permitted to join the target session, present, in the window, a reminder of permission of joining the target session.

In some embodiments, the reminder includes countdown information for automatically jumping to the live streaming interface.

In some embodiments, the presenting module 730 is further configured to in accordance with a determination that the first user is permitted to join the target session, present the live streaming interface and closing the window after a predetermined time period.

In some embodiments, the presenting module 730 is further configured to: receive a closing request to close the window; present prompt information, the prompt information indicating that a request to join the target session will be cancelled; and in response to receiving a confirmation for the prompt information, close the window and canceling the request to join the target session.

In some embodiments, the predetermined operation corresponds to a second user, and the second user is a viewer of the target session.

In some embodiments, in the target interface, a playing priority of an audio content is higher than a playing priority of the window.

In some embodiments, the predetermined request corresponds to a third user, and the third user is a participant of the target session.

In some embodiments, in the window, a playing priority of an audio content is higher than a playing priority of the target interface.

In some embodiments, the presenting module 730 is further configured to: in accordance with a determination that a number of participants of the target session is less than a predetermined threshold, present, in the window, description information of all participants; or in accordance with a determination that a number of participants of the target session is greater than or equal to a predetermined threshold, present, in the window, description information of a predetermined number of participants among all participants.

In some embodiments, the presenting module 730 is further configured to in accordance with a determination that the at least one participant is outputting an audio, cause the description information of the at least one participant to be presented in the window highlighted.

In some embodiments, the presenting module 730 is further configured to in response to a change in participant information in the target session, update the window to indicate the change in the participant information.

In some embodiments, the audio-visual content includes a real-time video stream and/or a real-time audio stream.

In some embodiments, the presenting module 730 is further configured to in response to a predetermined operation for the window, presenting the live streaming interface and closing the window.

In some embodiments, the target session corresponds to a voice chat session or a video chat session in the live streaming room.

In some embodiments, a layout of the description information of the at least one participant in the window is determined based on at least one of: an order of the at least one participant in joining the target session; or a sequence number assigned to the at least one participant in the target session.

The units included in the apparatus 700 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the elements in the apparatus 700 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

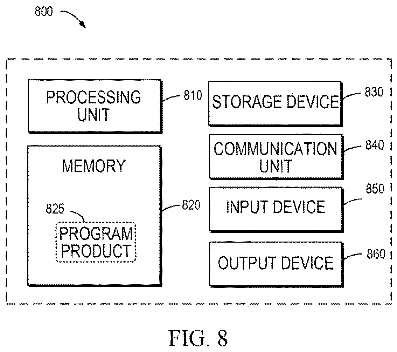

FIG. 8 illustrates a block diagram of a computing device/server 800 in which one or more embodiments of the present disclosure may be implemented. It should be understood that the computing device/server 800 illustrated in FIG. 8 is merely illustratively and should not constitute any limitation on the functionality and scope of the embodiments described herein.

As illustrated in FIG. 8, the computing device/server 800 is in the form of a general-purpose computing device. Components of the computing device/server 800 may include, but are not limited to, one or more processors or processing units 810, a memory 820, a storage device 830, one or more communication units 840, one or more input devices 860, and one or more output devices 860. The processing unit 810 may be an actual or virtual processor and capable of performing various processes according to programs stored in the memory 820. In multiprocessor systems, multiple processing units execute computer-executable instructions in parallel to improve the parallel processing capability of computing device/server 800.

Computing device/server 800 typically includes a plurality of computer storage media. Such media may be any available media accessible by the computing device/server 800, including, but not limited to, volatile and non-volatile media, removable and non-removable media. The memory 820 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 830 may be a removable or non-removable medium and may include a machine-readable medium, such as a flash drive, magnetic disk, or any other medium, which may be capable of storing information and/or data (e.g., training data for training) and may be accessed within computing device/server 800.

The computing device/server 800 may further include additional removable / non-removable, volatile/non-volatile storage media. Although not illustrated in FIG. 8, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not illustrated) by one or more data media interfaces. The memory 820 may include a computer program product 825 having one or more program modules configured to perform various methods or actions of various embodiments of the present disclosure.

The communications unit 840 implements communications with other computing devices over a communications medium. Additionally, the functionality of components of the computing device/server 800 may be implemented in a single computing cluster or multiple computing machines capable of communicating over a communication connection. Thus, the computing device/server 800 may operate in a networked environment using logical connections with one or more other servers, network personal computers (PCs), or another network node.

The input device 850 may be one or more input devices such as a mouse, a keyboard, a trackball, or the like. The output device 860 may be one or more output devices, such as a display, a speaker, a printer, or the like. Computing device/server 800 may also communicate with one or more external devices (not illustrated) as needed, external devices such as storage devices, display devices, etc., communicate with one or more devices that enable a user to interact with computing device/server 800, or communicate with any device (e.g., network card, modem, etc.) that enables computing device/server 800 to communicate with one or more other computing devices. Such communication may be performed via an input/output (I/O) interface (not illustrated).

According to example implementations of the present disclosure, there is provided a computer-readable storage medium having one or more computer instructions stored thereon, wherein one or more computer instructions are executed by a processor to implement the method described above.

Aspects of the present disclosure are described herein with reference to flowcharts and/or block diagrams of methods, apparatuses (systems), and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustratively, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the implementations disclosed herein.

## Claims

1. A method for live streaming interface interaction, comprising:
receiving a predetermined request for a live streaming interface, the live streaming interface providing, in real time, an audio-visual content associated with a target session established in a live streaming room;
causing a target interface corresponding to the predetermined request to be presented; and
superimposing, on the target interface, a window associated with the live streaming interface, the window at least displaying description information associated with at least one participant in the target session.

2. The method of claim 1, wherein receiving the predetermined request for the live streaming interface comprises:
receiving a first request to jump to the target interface;
receiving a second request to exit the live streaming interface; or
receiving a third request to display the live streaming interface in a windowed manner.

3. The method of claim 1, wherein the description information associated with the at least one participant comprises:
a text identification of the at least one participant; and/or
an image identification of the at least one participant.

4. The method of claim 1, wherein the description information associated with the at least one participant comprises:
a dynamic graphic corresponding to an audio stream from the at least one participant; and/or
a video stream from the at least one participant.

5. The method of claim 1, wherein the predetermined request corresponds to a first user, and the first user is an applicant who applies to join the target session.

6. The method of claim 5, wherein the window further presents application information, and the application information indicating an application status associated with a request to join the target session.

7. The method of claim 6, wherein the application information at least indicates:
a number of users waiting to join the target session before the first user; and/or
an expected waiting time for the first user to join the target session.

8. The method of claim 5, further comprising:
in accordance with a determination that the first user is permitted to join the target session, presenting, in the window, a reminder of permission of joining the target session.

9. The method of claim 8, wherein the reminder comprises: countdown information for automatically jumping to the live streaming interface.

10. The method of claim 5, further comprising:
in accordance with a determination that the first user is permitted to join the target session, presenting the live streaming interface and closing the window after a predetermined time period.

11. The method of claim 5, further comprising:
receiving a close request to close the window;
presenting prompt information, the prompt information indicating that a request to join the target session will be canceled, and
in response to receiving a confirmation for the prompt information, closing the window and canceling the request to join the target session.

12. The method of claim 1, wherein the predetermined request corresponds to a second user, and the second user is a viewer of the target session.

13. The method of any of claims 5 to 12, wherein in the target interface, a playing priority of an audio content is higher than a playing priority of the window.

14. The method of claim 1, wherein the predetermined request corresponds to a third user, and the third user is a participant of the target session.

15. The method of claim 14, wherein in the window, a playing priority of an audio content is higher than a playing priority of the target interface.

16. The method of claim 1, further comprising:
in accordance with a determination that a number of participants of the target session is less than a predetermined threshold, presenting, in the window, description information of all participants; or
in accordance with a determination that a number of participants of the target session is greater than or equal to a predetermined threshold, presenting, in the window, description information of a predetermined number of participants among all participants.

17. The method of claim 1, further comprising:
in accordance with a determination that the at least one participant is outputting an audio, causing the description information of the at least one participant to be presented in the window highlighted.

18. The method of claim 1, further comprising:
in response to a change in participant information in the target session, updating the window to indicate the change in the participant information.

19. The method of claim 1, wherein the audio-visual content comprises a real-time video stream and/or a real-time audio stream.

20. The method of claim 1, further comprising:
in response to a predetermined operation for the window, presenting the live streaming interface and closing the window.

21. The method of claim 1, wherein the target session corresponds to a voice chat session or a video chat session in the live streaming room.

22. The method of claim 1, wherein a layout of the description information of the at least one participant in the window is determined based on at least one of:
an order of the at least one participant in joining the target session; or
a sequence number assigned to the at least one participant in the target session.

23. An apparatus for live streaming interface interaction, comprising:
a receiving module configured to receive a predetermined request for a live streaming interface, the live streaming interface providing, in real time, an audio-visual content associated with a target session established in a live streaming room;
a control module configured to cause a target interface corresponding to the predetermined request to be presented; and
a presenting module configured to superimpose, on the target interface, a window associated with the live streaming interface, the window at least displaying description information associated with at least one participant in the target session.

24. An electronic device, comprising:
at least one processing unit; and
at least one memory coupled to the at least one processing unit and storing instructions executable by the at least one processing unit, the instructions, when executed by the at least one processing unit, causing the apparatus to perform the method of any of claims 1 to 22.

25. A computer-readable storage medium having a computer program stored thereon that, when executed by a processor, performing the method of any of claims 1 to 22.
